# EUROPEAN PATENT APPLICATION

(11) **EP 2 301 993 A1**
(43) Date of publication of application: **30.03.2011**
(21) Application number: 08791047.7
(22) Date of filing: 10.07.2008
(51) Int. Cl.: C08J 5/04, C01B 31/02, D01F 9/127

(54) **CARBON NANOFIBER, PROCESS FOR PRODUCING THE SAME, AND CARBON FIBER COMPOSITE MATERIAL**

(71) Applicant: Nissin Kogyo Co., Ltd., Ueda-shi Nagano 386-8505 (JP); Mefs Kabushiki Kaisha, Ooaza Kurita Nagano-shi Nagano 380-0921 (JP)
(72) Inventor: NOGUCHI, Toru, Ueda-shi Nagano 386-8505 (JP); UEKI, Hiroyuki, Ueda-shi Nagano 386-8505 (JP); IINOU, Satoshi, Nagano-shi Nagano 380-0921 (JP); TAKEUCHI, Kenji, Nagano-shi Nagano 380-0921 (JP)
(74) Representative: Strehl Schübel-Hopf & Partner
(86) International application number: PCT/JP2008/062489
(87) International publication number: WO 2010/004634

(57) **Abstract**

A carbon fiber composite material includes an elastomer 30 and carbon nanofibers 40 uniformly dispersed in the elastomer 30. The carbon nanofibers are produced by a vapor growth method and then heated at a temperature that is in a range from 1100 to 1600°C and is higher than the reaction temperature employed in the vapor growth method.

## Description

### TECHNICAL FIELD

The present invention relates to carbon nanofibers which exhibit improved wettability with a matrix material, a method of producing the same, and a carbon fiber composite material using the carbon nanofibers.

### BACKGROUND ART

Carbon nanofibers have been known as a filler which is dispersed in a matrix to only a small extent. The inventors of the invention proposed a method of producing a carbon fiber composite material which improves the dispersibility of carbon nanofibers so that the carbon nanofibers can be uniformly dispersed in an elastomer (see JP-A-2005-97525, for example). According to this method of producing a carbon fiber composite material, the elastomer and the carbon nanofibers are mixed so that the dispersibility of the carbon nanofibers with strong aggregating properties is improved due to a shear force. Specifically, when mixing the elastomer and the carbon nanofibers, the viscous elastomer enters the space between the carbon nanofibers while specific portions of the elastomer are bonded to highly active sites of the carbon nanofibers through chemical interaction. When a high shear force is applied to the mixture of the carbon nanofibers and the elastomer having an appropriately long molecular length and a high molecular mobility (exhibiting elasticity), the carbon nanofibers move along with the deformation of the elastomer. The aggregated carbon nanofibers are separated by the restoring force of the elastomer due to its elasticity, and become dispersed in the elastomer. Expensive carbon nanofibers can be efficiently used as a filler for a composite material by thus improving the dispersibility of the carbon nanofibers in the matrix.

Carbon nanofibers are industrially mass-produced by a vapor growth method that pyrolyzes a gas such as a hydrocarbon gas in the presence of a metal catalyst. Carbon nanofibers which are mass-produced by the vapor growth method in a heating furnace at about 1000°C and further graphitized by heating at a higher temperature have been known (see JP-A-2006-198393, for example). JP-A-2006-198393 discloses that the heating temperature for graphitizing the carbon nanofibers is 2000°C or more, preferably 2500°C or more, and particularly preferably 2800 to 3200°C or more. The carbon nanofibers thus graphitized have a surface with a small number of defects. However, such carbon nanofibers exhibit poor wettability with a matrix material (e.g., elastomer).

### DISCLOSURE OF THE INVENTION

An objective of the invention is to provide carbon nanofibers which exhibit improved wettability with a matrix material, a method of producing the same, and a carbon fiber composite material using the carbon nanofibers.

According to one embodiment of the invention, there is provided a carbon fiber composite material comprising:
an elastomer; and
carbon nanofibers uniformly dispersed in the elastomer,
the carbon nanofibers being produced by a vapor growth method and then heated at a temperature that is in a range from 1100 to 1600°C and is higher than the reaction temperature employed in the vapor growth method.

The carbon fiber composite material allows the carbon nanofibers to exhibit improved wettability with the elastomer, and exhibits improved rigidity and 100% modulus due to the carbon nanofibers.

In the carbon fiber composite material, the temperature of the heat treatment may be from 1200 to 1500°C.

In the carbon fiber composite material, the heat-treated carbon nanofibers may have a ratio (D/G) of a peak intensity D at around 1300 cm⁻¹ to a peak intensity G at around 1600 cm⁻¹ measured by Raman scattering spectroscopy of more than 1.25 and less than 1.6.

The carbon fiber composite material may comprise 15 to 120 parts by weight of the carbon nanofibers based on 100 parts by weight of the elastomer; and
the carbon fiber composite material may have an elongation at break at 23°C of 95% or more, and a rate of increase in 100% modulus with respect to the 100% modulus of the elastomer of 13% or more per part by weight of the carbon nanofibers mixed into 100 parts by weight of the elastomer.

The carbon fiber composite material in uncrosslinked form may have a spin-spin relaxation time (T2s/150°C), measured at 150°C by the solid-echo method using the pulsed NMR technique with ¹H as an observing nucleus, of 5 to 50 microseconds; and
the carbon fiber composite material in uncrosslinked form may have a first spin-spin relaxation time (T2n), measured at 150°C by the Hahn-echo method using the pulsed NMR technique with ¹H as an observing nucleus, of 100 to 3000 microseconds, and a fraction (fnn) of components having a second spin-spin relaxation time of 0 to 0.1.

In the carbon fiber composite material, the heat treatment may be conducted in an inert gas atmosphere.

According to one embodiment of the invention, there is provided carbon nanofibers obtained by heating untreated carbon nanofibers produced by a vapor growth method at a temperature that is in a range from 1100 to 1600°C and is higher than a reaction temperature employed in the vapor growth method.

The carbon nanofibers exhibit improved surface reactivity and wettability with a matrix material (e.g., elastomer).

In the carbon nanofibers, the temperature of the heat treatment may be from 1200 to 1500°C.

The carbon nanofibers may have a ratio (D/G) of a peak intensity D at around 1300 cm⁻¹ to a peak intensity G at around 1600 cm⁻¹ measured by Raman scattering spectroscopy of more than 1.25 and less than 1.6.

In the carbon nanofibers, the heat treatment may be conducted in an inert gas atmosphere.

According to one embodiment of the invention, there is provided a method of producing carbon nanofibers comprising:
heating untreated carbon nanofibers produced by a vapor growth method at a temperature that is in a range from 1100 to 1600°C and is higher than a reaction temperature employed in the vapor growth method.

The method of producing carbon nanofibers can produce carbon nanofibers which exhibit improved surface reactivity and wettability with a matrix material.

In the method of producing carbon nanofibers, the temperature of the heat treatment may be from 1200 to 1500°C.

In the method of producing carbon nanofibers, the heat treatment may be conducted in an inert gas atmosphere.

### BRIEF DESCRIPTION OF THE DRAWINGS

FIG 1 is an explanatory view schematically showing a method of producing a carbon fiber composite material using an open-roll method.
FIG 2 shows an electron micrograph (photographed at 3.0 kV, magnification: 5000) of the tensile fractured surface of a carbon fiber composite material of Example 6.
FIG 3 shows an electron micrograph (photographed at 3.0 kV, magnification: 20,000) of the tensile fractured surface of a carbon fiber composite material of Example 6.
FIG 4 shows an electron micrograph (photographed at 3.0 kV, magnification: 5000) of the tensile fractured surface of a carbon fiber composite material of Comparative Example 4.
FIG 5 shows an electron micrograph (photographed at 3.0 kV, magnification: 20,000) of the tensile fractured surface of a carbon fiber composite material of Comparative Example 4.

### BEST MODE FOR CARRYING OUT THE INVENTION

Embodiments of the invention are described in detail below.

A carbon fiber composite material according to one embodiment of the invention includes an elastomer and carbon nanofibers uniformly dispersed in the elastomer, the carbon nanofibers being produced by a vapor growth method and then heated at a temperature that is in the range from 1100 to 1600°C and is higher than the reaction temperature employed in the vapor growth method.

Carbon nanofibers according to one embodiment of the invention are obtained by heating untreated carbon nanofibers produced by a vapor growth method at a temperature that is in the range from 1100 to 1600°C and is higher than the reaction temperature employed in the vapor growth method.

A method of producing carbon nanofibers according to one embodiment of the invention includes heating untreated carbon nanofibers produced by a vapor growth method at a temperature that is in the range from 1100 to 1600°C and is higher than the reaction temperature employed in the vapor growth method.

### (I) Elastomer

The elastomer used for the carbon fiber composite material is described below.

The elastomer preferably has a molecular weight of 5000 to 5,000,000, and more preferably 20,000 to 3,000,000. If the molecular weight of the elastomer is within the above range, the elastomer molecules are entangled and linked. Therefore, the elastomer exhibits excellent elasticity that allows the carbon nanofibers to be dispersed. Since the elastomer exhibits viscosity, the elastomer easily enters the space between the aggregated carbon nanofibers. Moreover, the elastomer allows the carbon nanofibers to be separated due to its elasticity.

The network component of the elastomer in uncrosslinked form preferably has a spin-spin relaxation time (T2n/30°C), measured for ¹H at 30°C by a Hahn-echo method using a pulsed nuclear magnetic resonance (NMR) technique, of 100 to 3000 microseconds, and more preferably 200 to 1000 microseconds. If the elastomer has a spin-spin relaxation time (T2n/30°C) within the above range, the elastomer exhibits flexibility and has sufficiently high molecular mobility. Specifically, the elastomer exhibits appropriate elasticity for dispersing the carbon nanofibers. Moreover, since the elastomer exhibits viscosity, the elastomer can easily enter the space between the carbon nanofibers due to high molecular mobility when mixing the elastomer and the carbon nanofibers.

The network component of the elastomer in crosslinked form preferably has a spin-spin relaxation time (T2n), measured for ¹H at 30°C by the Hahn-echo method using the pulsed NMR technique, of 100 to 2000 microseconds. The reasons therefor are the same as those described for the uncrosslinked form. Specifically, when crosslinking the elastomer in uncrosslinked form that satisfies the above conditions, the spin-spin relaxation time (T2n) of the resulting elastomer in crosslinked form almost falls within the above range.

The spin-spin relaxation time determined by the Hahn-echo method using the pulsed NMR technique is a measure that indicates the molecular mobility of a substance. Specifically, when measuring the spin-spin relaxation time of the elastomer by the Hahn-echo method using the pulsed NMR technique, a first component having a shorter first spin-spin relaxation time (T2n) and a second component having a longer second spin-spin relaxation time (T2nn) are detected. The first component corresponds to the network component (backbone molecule) of the polymer, and the second component corresponds to the non-network component (branched component such as a terminal chain) of the polymer. The shorter the first spin-spin relaxation time, the lower the molecular mobility and the harder the elastomer. The longer the first spin-spin relaxation time, the higher the molecular mobility and the softer the elastomer.

As the measurement method using the pulsed NMR technique, a solid-echo method, a Carr-Purcell-Meiboom-Gill (CPMG) method, or a 90-degree pulse method may be used instead of the Hahn-echo method. Since the elastomer according to the invention has a medium spin-spin relaxation time (T2), the Hahn-echo method is most suitable. In general, the solid-echo method and the 90-degree pulse method are suitable for measuring a short spin-spin relaxation time (T2), the Hahn-echo method is suitable for measuring a medium spin-spin relaxation time (T2), and the CPMG method is suitable for measuring a long spin-spin relaxation time (T2).

At least one of the main chain, side chain, and terminal chain of the elastomer includes an unsaturated bond or a group having affinity to the carbon nanofibers (particularly to terminal radicals of the carbon nanofibers), or the elastomer has properties of readily producing such a radical or group. The unsaturated bond or group may be at least one unsaturated bond or group selected from a double bond, a triple bond, and functional groups such as a carbonyl group, a carboxyl group, a hydroxyl group, an amino group, a nitrile group, a ketone group, an amide group, an epoxy group, an ester group, a vinyl group, a halogen group, a urethane group, a biuret group, an allophanate group, and a urea group.

In this embodiment, since at least one of the main chain, side chain, and terminal chain of the elastomer includes an unsaturated bond or a group having high affinity (reactivity or polarity) to radicals of the carbon nanofibers, the elastomer and the carbon nanofibers can be bonded. This enables the carbon nanofibers to be easily dispersed in spite of the aggregating force of the carbon nanofibers. When mixing the elastomer and the carbon nanofibers, free radicals produced due to breakage of the elastomer molecules attack the defects of the carbon nanofibers to produce radicals on the surface of the carbon nanofibers.

As the elastomer, an elastomer such as natural rubber (NR), epoxidized natural rubber (ENR), styrene-butadiene rubber (SBR), nitrile rubber (NBR), chloroprene rubber (CR), ethylene propylene rubber (EPR or EPDM), butyl rubber (IIR), chlorobutyl rubber (CIIR), acrylic rubber (ACM), silicone rubber (Q), fluorine rubber (FKM), butadiene rubber (BR), epoxidized butadiene rubber (EBR), epichlorohydrin rubber (CO or CEO), urethane rubber (U), or polysulfide rubber (T); a thermoplastic elastomer such as an olefin-based elastomer (TPO), a polyvinyl chloride-based elastomer (TPVC), a polyester-based elastomer (TPEE), a polyurethane-based elastomer (TPU), a polyamide-based elastomer (TPEA), or a styrene-based elastomer (SBS), or a mixture of these elastomers may be used. It is particularly preferable to use a highly polar elastomer which readily produces free radicals when mixing the elastomer, such as natural rubber (NR) or nitrile rubber (NBR). An elastomer having a low polarity (e.g., ethylene propylene rubber (EPDM)) may also be used in the invention, since such an elastomer also produces free radicals when the mixing temperature is adjusted to a relatively high temperature (e.g., 50 to 150°C for EPDM).

The elastomer used in this embodiment may be either a rubber elastomer or a thermoplastic elastomer. When using a rubber elastomer, the elastomer may be in crosslinked form or uncrosslinked form. It is preferable to use an elastomer in uncrosslinked form.

### (II) Carbon nanofibers

The carbon nanofibers are described below.

The carbon nanofibers are obtained by heating untreated carbon nanofibers produced by a vapor growth method at a temperature that is in the range from 1100 to 1600°C and is higher than the reaction temperature employed in the vapor growth method. A method of producing the carbon nanofibers includes heating untreated carbon nanofibers produced by a vapor growth method at a temperature that is in the range from 1100 to 1600°C and is higher than the reaction temperature employed in the vapor growth method. The heating temperature is preferably 1200 to 1500°C. Since the heating temperature is higher than the reaction temperature employed in the vapor growth method, the surface structure of the carbon nanofibers can be adjusted so that surface defects can be reduced. If the heating temperature is 1100 to 1600°C, the carbon nanofibers exhibit improved surface reactivity with a matrix material (e.g., elastomer) so that nonuniform dispersion of the carbon nanofibers in the matrix material can be suppressed. The untreated carbon nanofibers are preferably heated in an inert gas atmosphere.

The carbon nanofibers thus heated preferably have a ratio (D/G) of a peak intensity D at around 1300 cm⁻¹ to a peak intensity G at around 1600 cm⁻¹ measured by Raman scattering spectroscopy of more than 1.25 and less than 1.6. In the Raman spectrum of the carbon nanofibers, the peak intensity D at around 1300 cm⁻¹ is attributed to defects in the crystal that forms the carbon nanofibers, and the peak intensity G at around 1600 cm⁻¹ is attributed to the crystal that forms the carbon nanofibers. Therefore, the smaller the ratio (D/G) of the peak intensity D to the peak intensity G, the higher the degree of crystallization of the carbon nanofibers. Accordingly, the smaller the ratio (D/G) of the peak intensity D to the peak intensity G, the higher the degree of graphitization of the carbon nanofibers (i.e., the number of surface defects is small). Therefore, carbon nanofibers having the ratio (D/G) of the peak intensity D to the peak intensity G within the above range appropriately have non-crystalline portions on the surface to exhibit excellent wettability with the elastomer. Moreover, since the number of surface defects is relatively small, the carbon nanofibers exhibit sufficient strength.

The vapor growth method pyrolyzes a gas such as a hydrocarbon gas in the presence of a metal catalyst to produce untreated carbon nanofibers. As the vapor growth method, a method that introduces an organic compound (e.g., benzene or toluene) (i.e., raw material) and an organotransition metal compound (e.g., ferrocene or nickelocene) (i.e., metal catalyst) into a reaction furnace set at a high temperature (e.g., 400 to 1000°C) together with a carrier gas to produce untreated carbon nanofibers on a substrate, a method that produces untreated carbon nanofibers in a floating state, a method that causes untreated carbon nanofiber to be grown on the wall of the reaction furnace, or the like may be used. Alternatively, metal-containing particles supported on a fire-resistant support (e.g., alumina or carbon) may be caused to come in contact with a carbon-containing compound at a high temperature to obtain untreated carbon nanofibers having a diameter of 70 nm or less.

The average diameter of the untreated carbon nanofibers produced by the vapor growth method is preferably 1 to 350 nm, more preferably 10 to 300 nm or 50 to 200 nm, and particularly preferably 70 to 100 nm.

The amount of the carbon nanofibers added to the composite material may be determined depending on the application. A crosslinked elastomer or an uncrosslinked elastomer may be used as the elastomer material for the carbon fiber composite material. The carbon fiber composite material may be used as a raw material for a metal or resin composite material. The carbon fiber composite material as a raw material for a metal or resin composite material may be used as a masterbatch (i.e., carbon nanofiber source) when mixing the carbon nanofibers into a metal or a resin.

As examples of the carbon nanofibers, a carbon nanotube and the like can be mentioned. The carbon nanotube has a structure in which a graphite hexagonal carbon layer is rolled in one or more layers. A carbon material having a partial carbon nanotube structure may also be used. The carbon nanotube may also be referred to as a graphite fibril nanotube or a vapor-grown carbon fiber.

### (III) Carbon fiber composite material

The carbon fiber composite material is described below.

In the carbon fiber composite material, the carbon nanofibers that have been heated are uniformly dispersed in the elastomer. Since the ground carbon nanofibers exhibit improved wettability with the elastomer due to heating, a highly rigid carbon fiber composite material is obtained.

The carbon fiber composite material in uncrosslinked form preferably has a spin-spin relaxation time (T2s/150°C), measured for ¹H at 150°C by the Hahn-echo method using the pulsed NMR technique, of 5 to 50 microseconds, a first spin-spin relaxation time (T2n), measured for ¹H at 150°C by the Hahn-echo method using the pulsed NMR technique, of 100 to 3000 microseconds, and a fraction (fnn) of components having a second spin-spin relaxation time of 0 to 0.1.

The spin-spin relaxation times (T2s, T2m, and T21) measured by the solid-echo method are measures that indicate the molecular mobility of a rubber composition. The spin-spin relaxation time (T2s) of the carbon fiber composite material is detected, but the spin-spin relaxation times (T2m and T21) of the carbon fiber composite material are detected to only a small extent. Since the spin-spin relaxation time (T2s) is affected to a large extent by magnetic field nonuniformity, the spin-spin relaxation time (T2s) can be used as a measure that indicates the nonuniformity of the internal structure of the carbon fiber composite material. The carbon fiber composite material in which the carbon nanofibers are dispersed shows a reduced spin-spin relaxation time (T2s/150°C) measured at 150°C by the solid-echo method.

The first spin-spin relaxation time (T2n) and the fraction (fnn) of the carbon fiber composite material indicate whether or not the carbon nanofibers are uniformly dispersed in the elastomer (matrix). Specifically, when the carbon nanofibers are uniformly dispersed in the elastomer, the elastomer is restrained by the carbon nanofibers. In this state, the mobility of the elastomer molecules restrained by the carbon nanofibers is lower than that of the elastomer molecules which are not restrained by the carbon nanofibers. Therefore, the first spin-spin relaxation time (T2n), the second spin-spin relaxation time (T2nn), and the spin-lattice relaxation time (T1) of the carbon fiber composite material are shorter than those of the elastomer which does not include the carbon nanofibers. In particular, the first spin-spin relaxation time (T2n), the second spin-spin relaxation time (T2nn), and the spin-lattice relaxation time (T1) are further reduced when the carbon nanofibers are uniformly dispersed.

When the elastomer molecules are restrained by the carbon nanofibers, the number of non-network components (non-reticulate chain components) is considered to be reduced for the following reasons. Specifically, when the molecular mobility of the entire elastomer decreases due to the carbon nanofibers, the number of non-network components which cannot easily move increases, whereby the non-network components tend to behave in the same manner as the network components. Moreover, since the non-network components (terminal chains) easily move, the non-network components tend to be adsorbed on the active sites of the carbon nanofibers. It is considered that these phenomena decrease the number of non-network components. Therefore, the fraction (fnn) of components having the second spin-spin relaxation time (T2nn) becomes smaller than that of the elastomer which does not include the carbon nanofibers since fn+fnn=1. Accordingly, when the carbon fiber composite material has values measured by the Hahn-echo method using the pulsed NMR technique within the above ranges, the carbon nanofibers are uniformly dispersed in the carbon fiber composite material.

The carbon fiber composite material includes 15 to 120 parts by weight (phr) of the carbon nanofibers based on 100 parts by weight (phr) of the elastomer. The carbon fiber composite material has an elongation at break at 23°C of 95% or more and a rate of increase in 100% modulus with respect to the 100% modulus of the elastomer of 13% or more per part by weight of the carbon nanofibers mixed into 100 parts by weight of the elastomer. The rate of increase in 100% modulus is calculated by measuring the 100% modulus of the elastomer and the 100% modulus of the carbon fiber composite material, calculating the difference between the 100% modulus of the elastomer and the 100% modulus of the carbon fiber composite material, dividing the difference by the 100% modulus of the elastomer, and dividing the resulting value by the amount (parts by weight) of the carbon nanofibers. When the carbon fiber composite material includes carbon black or the like in addition to the carbon nanofibers, an increase in 100% modulus due to the carbon black or the like is subtracted from the 100% modulus of the carbon fiber composite material.

### (IV) Method of producing carbon fiber composite material

A method of producing the carbon fiber composite material is described below.

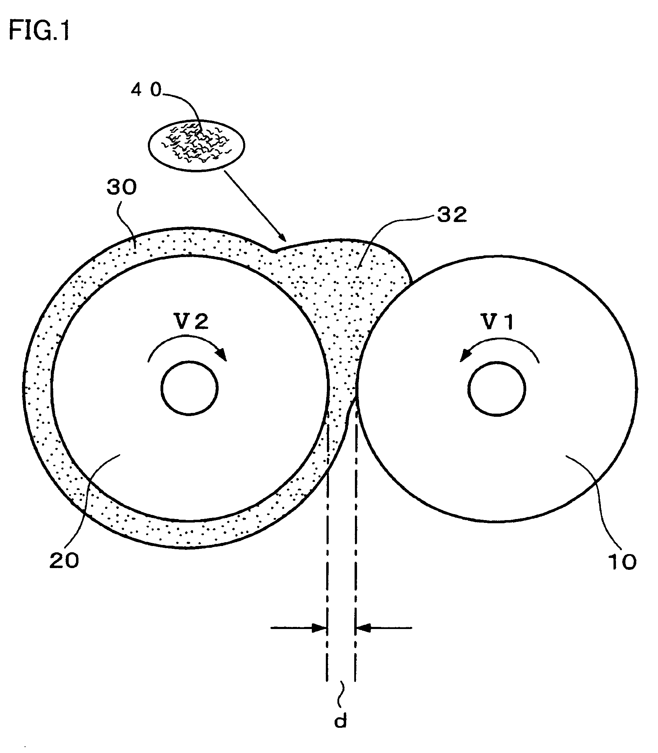

FIG 1 is a view schematically showing a method of producing the carbon fiber composite material using an open-roll method.

The network component of the elastomer (raw material) in uncrosslinked form preferably has a spin-spin relaxation time (T2n), measured at 150°C by the Hahn-echo method using the pulsed NMR technique, of 100 to 3000 microseconds. As shown in FIG. 1, a first roll 10 and a second roll 20 are disposed at a predetermined distance d (e.g., 0.5 to 1.0 mm). The first roll 10 and the second roll 20 are respectively rotated at rotational speeds V1 and V2 in the directions indicated by arrows in FIG 1 or in the reverse directions. An elastomer 30 wound around the first roll 10 is masticated. This causes the molecular chain of the elastomer to be moderately cut to produce free radicals. Since the carbon nanofibers have a reduced number of surface defects due to heating and appropriately have non-crystalline portions on the surface, radicals and functional groups are easily produced so that free radicals of the elastomer produced by mastication are easily bonded to the carbon nanofibers.

Carbon nanofibers 40 are then supplied to a bank 34 of the elastomer 30 wound around the first roll 10, and the elastomer 30 and the carbon nanofibers 40 are mixed. The elastomer 30 and the carbon nanofibers 40 may be mixed by an internal mixing method or a multi-screw extrusion kneading method instead of the open-roll method.

After setting the distance d between the first roll 10 and the second roll 20 preferably at 0.5 mm or less, and more preferably 0 to 0.5 mm, the mixture is supplied to the open rolls and tight-milled a plurality of times. The mixture is preferably tight-milled about five to ten times, for example. When the surface velocity of the first roll 10 is referred to as V1 and the surface velocity of the second roll 20 is referred to as V2, the surface velocity ratio (V1/V2) of the first roll 10 to the second roll 20 during tight milling is preferably set at 1.05 to 3.00, and more preferably 1.05 to 1.2. A desired shear force can be obtained using such a surface velocity ratio. A carbon fiber composite material obtained by tight milling is sheeted by the rolls. In the tight milling step, the elastomer 30 is preferably tight-milled while setting the roll temperature at a relatively low temperature (preferably 0 to 50°C, and more preferably 5 to 30°C) in order to obtain a shear force as high as possible. The temperature of the elastomer 30 measured is preferably adjusted to 0 to 50°C. This causes a high shear force to be applied to the elastomer 30, whereby the aggregated carbon nanofibers 40 are separated so that the carbon nanofibers 40 are removed one by one by the elastomer molecules and become dispersed in the elastomer 30. In particular, since the elastomer 30 has elasticity, viscosity, and chemical interaction with the carbon nanofibers 40, the carbon nanofibers 40 are easily dispersed in the elastomer 30. As a result, a carbon fiber composite material in which the carbon nanofibers 40 exhibit excellent dispersibility and dispersion stability (i.e., the carbon nanofibers rarely re-aggregate) can be obtained.

Specifically, when mixing the elastomer and the carbon nanofibers using the open rolls, the viscous elastomer enters the space between the carbon nanofibers, and specific portions of the elastomer are bonded to highly active sites of the carbon nanofibers through chemical interaction. Since the surface of the carbon nanofibers is not graphitized to a large extent, the carbon nanofibers have an active surface due to non-crystalline portions appropriately remaining on the surface. Therefore, the carbon nanofibers are easily bonded to the elastomer molecules. When a high shear force is then applied to the elastomer, the carbon nanofibers move along with the movement of the elastomer molecules so that the aggregated carbon nanofibers are separated by the restoring force of the elastomer due to its elasticity after shearing, and become dispersed in the elastomer. According to this embodiment, when the carbon fiber composite material is extruded through the narrow space between the rolls, the carbon fiber composite material is deformed to a thickness greater than the roll distance as a result of the restoring force of the elastomer due to its elasticity. It is considered that the above deformation causes the carbon fiber composite material to which a high shear force is applied to flow in a more complicated manner to disperse the carbon nanofibers in the elastomer. The dispersed carbon nanofibers are prevented from re-aggregating due to chemical interaction with the elastomer so that excellent dispersion stability can be obtained.

The carbon nanofibers may be dispersed in the elastomer due to a shear force using the internal mixing method or the multi-screw extrusion kneading method instead of the open-roll method. In this step, it suffices that a shear force sufficient to separate the aggregated carbon nanofibers be applied to the elastomer. It is particularly preferable to use the open-roll method because the actual temperature of the mixture can be measured and controlled while controlling the roll temperature.

A crosslinking agent may be mixed into the carbon fiber composite material which has been tight-milled and sheeted, and the carbon fiber composite material may be crosslinked to obtain a crosslinked carbon fiber composite material. Note that the carbon fiber composite material may be molded without crosslinking the carbon fiber composite material. The carbon fiber composite material may be used in the form of a sheet obtained by the open-roll method. Alternatively, the carbon fiber composite material obtained by a step (d) may be molded into a desired shape (e.g., sheet) using a generally-used rubber molding method such as injection molding, transfer molding, press molding, extrusion molding, or calendering.

In the method of producing the carbon fiber composite material according to this embodiment, a compounding ingredient usually used when processing an elastomer may be added. As the compounding ingredient, a known compounding ingredient may be used. Examples of the compounding ingredient include a crosslinking agent, a vulcanizing agent, a vulcanization accelerator, a vulcanization retarder, a softener, a plasticizer, a curing agent, a reinforcing agent, a filler, an aging preventive, a colorant, and the like. These compounding ingredients may be added to the elastomer before supplying the carbon nanofibers to the open rolls, for example.

In the method of producing the carbon fiber composite material according to this embodiment, the carbon nanofibers are directly mixed into the elastomer having rubber elasticity. Note that the following method may also be employed. Specifically, the elastomer is masticated before mixing the carbon nanofibers into the elastomer to reduce the molecular weight of the elastomer. Since the viscosity of the elastomer decreases due to a decrease in molecular weight as a result of mastication, the elastomer easily enters the space between the aggregated carbon nanofibers. The raw material elastomer is a rubber elastic body of which the network component in uncrosslinked form has a spin-spin relaxation time (T2n), measured for ¹H at 30°C by the Hahn-echo method using the pulsed NMR technique, of 100 to 3000 microseconds. The raw material elastomer is masticated to reduce the molecular weight of the elastomer to obtain a liquid elastomer having a first spin-spin relaxation time (T2n) of more than 3000 microseconds. The first spin-spin relaxation time (T2n) of the liquid elastomer after mastication is preferably longer than the first spin-spin relaxation time (T2n) of the raw material elastomer before mastication by a factor of 5 to 30. The above mastication is performed until the elastomer is liquefied (i.e., until the elastomer exhibits fluidity which is not suitable for mixing) by cutting the molecules of the elastomer by applying a high shear force using the open-roll method or the like to reduce the molecular weight of the elastomer to a large extent, differing from normal mastication performed in a state in which the elastomer is solid. For example, when using the open-roll method, the elastomer is masticated at a roll temperature of 20°C (minimum mastication time: 60 minutes) to 150°C (minimum mastication time: 10 minutes). The roll distance d is set at 0.5 to 1.0 mm, for example. The carbon nanofibers are then supplied to the liquid elastomer obtained by mastication. However, since the elasticity of the liquid elastomer has been reduced to a large extent, the aggregated carbon nanofibers are dispersed to only a small extent even if the elastomer and the carbon nanofibers are mixed in a state in which free radicals of the elastomer are bonded to the carbon nanofibers.

Therefore, the molecular weight of the elastomer in the mixture obtained by mixing the liquid elastomer and the carbon nanofibers is increased so that the elastomer recovers its elasticity to obtain a rubber elastic body mixture, and the carbon nanofibers are then uniformly dispersed in the elastomer by tight milling using the open-roll method and the like. The mixture in which the molecular weight of the elastomer has been increased is a rubber elastic body of which the network component has a first spin-spin relaxation time (T2n), measured for ¹H at 30°C by the Hahn-echo method using the pulsed NMR technique, of 3000 microseconds or less. The first spin-spin relaxation time (T2n) of the rubber elastic body mixture in which the molecular weight of the elastomer has been increased is preferably higher than the first spin-spin relaxation time (T2n) of the raw material elastomer before mastication by a factor of 0.5 to 10. The elasticity of the rubber elastic mixture may be expressed by the molecular form (which may be observed from the molecular weight) or the molecular mobility (which may be observed from the first spin-spin relaxation time (T2n)) of the elastomer. The molecular weight of the elastomer is preferably increased by heating the mixture in a heating furnace at 40 to 100°C for 10 to 100 hours, for example. This causes the molecular chain of the elastomer to extend due to bonding between free radicals of the elastomer in the mixture so that the molecular weight of the elastomer increases. The molecular weight of the elastomer may be increased in a short period of time by mixing a small amount (e.g., 1/2 or less of a normal amount) of a crosslinking agent into the mixture and heating (e.g., annealing) the mixture to effect a crosslinking reaction. When increasing the molecular weight of the elastomer by a crosslinking reaction, it is preferable to set the amount of crosslinking agent, the heating time, and the heating temperature so that mixing in the subsequent step is not hindered.

According to the above-described method of producing the carbon fiber composite material, the carbon nanofibers can be more uniformly dispersed in the elastomer by reducing the viscosity of the elastomer before supplying the carbon nanofibers. Specifically, the liquid elastomer of which the molecular weight has been reduced easily enters the space between the aggregated carbon nanofibers as compared with the above-described method in which the carbon nanofibers are mixed into the elastomer having a high molecular weight, whereby the carbon nanofibers can be more uniformly dispersed in the tight milling step. Since a large number of free radicals of the elastomer produced by breakage of the elastomer molecules can be strongly bonded to the surface of the carbon nanofibers, the carbon nanofibers can be more uniformly dispersed in the elastomer. Therefore, the above-described production method enables an equivalent performance to be obtained with a reduced amount of carbon nanofibers, whereby economic efficiency can be improved by saving expensive carbon nanofibers.

### EXAMPLES

Examples according to the invention and comparative examples are described below. Note that the invention is not limited to the following examples.

### (1) Production of carbon nanofibers

A spray nozzle was provided at the top of a vertical heating furnace (inner diameter: 17.0 cm, length: 150 cm). The inner wall temperature (reaction temperature) of the heating furnace was increased to and maintained at 1000°C. A liquid raw material (i.e., benzene containing 4 wt% of ferrocene) (20 g/min) was supplied from the spray nozzle together with hydrogen gas (100 l/min) so that the raw material was directly sprayed onto the wall of the furnace. The spray nozzle had a conical shape (trumpet shape or umbrella shape). The vertex angle of the nozzle was 60°. Ferrocene was pyrolyzed under the above-mentioned conditions to produce iron particles. The iron particles served as seeds so that untreated carbon nanofibers were produced and grown from carbon produced by pyrolysis of benzene. The untreated carbon nanofibers were continuously produced by this method over one hour while scraping off the carbon nanofibers at intervals of five minutes. The untreated carbon nanofibers thus produced by the vapor growth method were heated at a heating temperature shown in Tables 1 and 2 (i.e., a temperature higher than the reaction temperature employed in the vapor growth method) in an inert gas atmosphere to obtain carbon nanofibers.

### (2) Preparation of samples of Examples 1 to 11 and Comparative Examples 1 to 8

A predetermined amount of elastomer (100 parts by weight (phr)) shown in Tables 1 and 2 was supplied to six-inch open rolls (roll temperature: 10 to 20°C, roll distance: 1.5 mm), and wound around the roll. After masticating the elastomer for five minutes, carbon nanofibers or carbon black in an amount shown in Tables 1 and 2 was supplied to the elastomer. The mixture was then removed from the open rolls. After reducing the roll distance from 1.5 mm to 0.3 mm, the mixture was supplied to the open rolls and then tight-milled five times. The surface velocity ratio of the two rolls was set at 1.1. After setting the roll distance at 1.1 mm, the carbon fiber composite material obtained by tight milling was supplied to the rolls and then sheeted.

The sheeted carbon fiber composite material was press-molded at 90°C for five minutes to obtain a sheet-shaped carbon fiber composite material (uncrosslinked form) having a thickness of 1 mm. The carbon fiber composite material was subjected to measurements by the Hahn-echo method and the solid-echo method using the pulsed NMR technique. A peroxide was mixed into the carbon fiber composite material obtained by tight milling. After setting the roll distance at 1.1 mm, the mixture was sheeted, and then press-crosslinked at 175°C and 100 kgf/cm² for 20 minutes to obtain a carbon fiber composite material (crosslinked form).

In Tables 1 and 2, "NR" indicates a natural rubber having a molecular weight of about 3,000,000, and "EPDM" indicates an ethylene-propylene rubber having a molecular weight of about 200,000. In Tables 1 and 2, "MWNT-A" indicates carbon nanofibers having an average diameter of 156 nm and an average length of 10 micrometers, "MWNT-B" indicates carbon nanofibers having an average diameter of 87 nm and an average length of 10 micrometers, and "HAF" indicates HAF-grade carbon black.

The ratio (D/G) of the peak intensity D at around 1300 cm⁻¹ to the peak intensity G at around 1600 cm⁻¹ were measured for "MWNT-A" and "MWNT-B" by Raman scattering spectroscopy using a measuring instrument "HOLOLAB-5000" (manufactured by KAISER OPTICAL SYSTEM, 532 nm ND: YAG). The results are shown in Tables 1 and 2.

The apparent densities (g/cm³) of "MWNT-A" and "MWNT-B" were measured by the tap method using a specific gravity measuring instrument (tapping machine) "KRS-409" (manufactured by Kuramochi Kagaku Kikai Co., Ltd.). The results are shown in Tables 1 and 2.

The specific surface areas by nitrogen adsorption (m²/g) of "MWNT-A" and "MWNT-B" were measured using a measuring instrument "NOVA 3000" (nitrogen gas) (manufactured by Yuasa-Ionics Co., Ltd.). The results are shown in Tables 1 and 2.

### (3) Measurement using pulsed NMR technique

The uncrosslinked carbon fiber composite material samples of Examples 1 to 11 and Comparative Examples 1 to 8 were subjected to measurement by the Hahn-echo method using the pulsed NMR technique. A measuring instrument "JMN-MU25" (manufactured by JEOL, Ltd.) was used for the measurement. The measurement was conducted under conditions of an observing nucleus of ¹H, a resonance frequency of 25 MHz, and a 90-degree pulse width of 2 microseconds. A decay curve was determined while changing Pi in the pulse sequence (90°x-Pi-180°x) of the Hahn-echo method. The measurement was conducted in a state in which the sample was inserted into a sample tube within an appropriate magnetic field range. The measurement temperature was 150°C. The first spin-spin relaxation time (T2n/150°C) and the fraction (fnn) of components having the second spin-spin relaxation time of each sample were determined by this measurement. The measurement results are shown in Tables 1 and 2. The first spin-spin relaxation times (T2n/30°C) of "NR" and "EPDM" measured in the same manner as described above were 700 microseconds and 520 microseconds, respectively. Each uncrosslinked carbon fiber composite material sample was also subjected to measurement by the solid-echo method using the pulsed NMR technique. A measuring instrument "JMN-MU25" (manufactured by JEOL, Ltd.) was used for the measurement. The measurement was conducted under conditions of an observing nucleus of ¹H, a resonance frequency of 25 MHz, and a 90-degree pulse width of 2 microseconds. A decay curve was determined in the pulse sequence (90°x-Pi-90°y) of the solid-echo method to detect the spin-spin relaxation time (T2s) at 150°C of each uncrosslinked carbon fiber composite material sample.

### (4) Measurement of hardness

The rubber hardness (JIS-A) of the crosslinked carbon fiber composite material samples of Examples 1 to 11 and Comparative Examples 1 and 8 was measured in accordance with JIS K 6253. The measurement results are shown in Tables 1 and 2.

### (5) Measurement of 100% modulus (M100)

The uncrosslinked carbon fiber composite material samples (width: 5 mm, length: 50 mm, thickness: 1 mm) of Examples 1 to 11 and Comparative Examples 1 and 8 were stretched at a rate of 10 mm/min, and the stress (M100: 100% modulus (MPa)) when the sample was deformed by 100% was determined. The measurement results are shown in Tables 1 and 2. The rate of increase in 100% modulus (M100 increase rate) of the carbon fiber composite material with respect to the 100% modulus of the elastomer per part by weight of the carbon nanofibers mixed into 100 parts by weight of the elastomer was calculated based on the measurement results. For example, the rate of increase in 100% modulus (M100 increase rate) (%) in Example 1 was calculated by dividing the difference in M100 between Example 1 and Comparative Example 6 (13.9-0.9) by the M100 (0.9) of Comparative Example 6, and dividing the resulting value by the amount (10) of MWNT-A of Example 1. Since 40 parts by weight of carbon black was used in Examples 7 and 8, an increase in 100% modulus due to the carbon black was considered to be the 100% modulus (2.5) of Comparative Example 7. For example, the rate of increase in 100% modulus (M100 increase rate) (%) in Example 7 was calculated by dividing the difference in M100 between Example 7 and Comparative Example 7 (11.2-2.5) by the M100 (0.9) of Comparative Example 6, and dividing the resulting value by the amount (20) of MWNT-A of Example 7.

### (6) Measurement of tensile strength (MPa) and elongation at break (%)

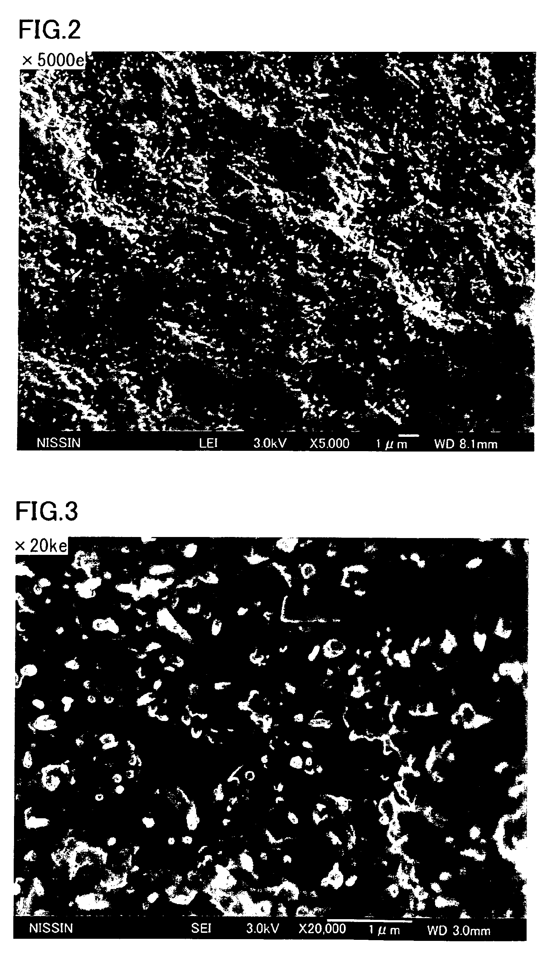

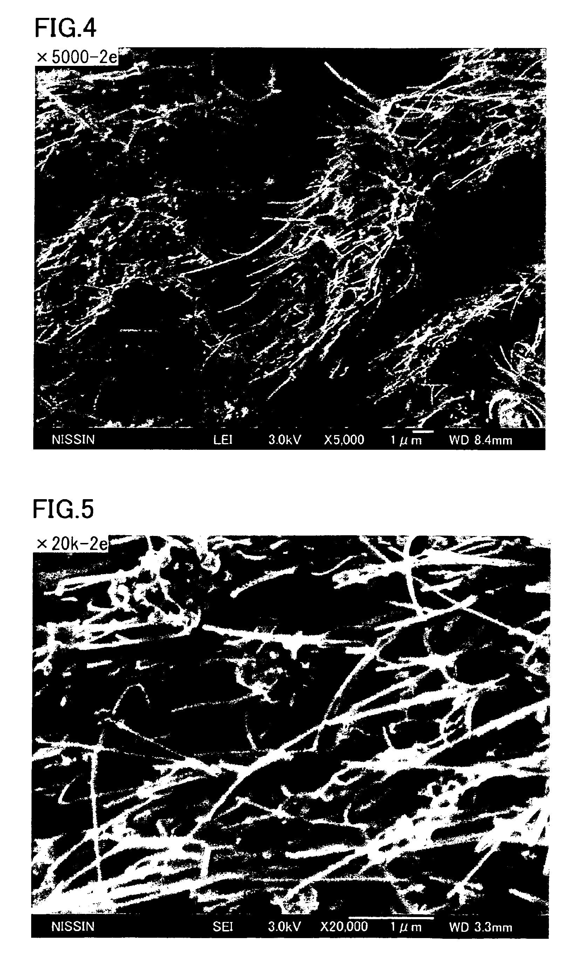

A specimen prepared by cutting each crosslinked carbon fiber composite material sample in the shape of a 1A dumbbell was subjected to a tensile test in accordance with JIS K 6251 at a temperature of 23±2°C and a tensile rate of 500 mm/min using a tensile tester (manufactured by Toyo Seiki Seisaku-sho, Ltd.) to measure the tensile strength (MPa) and the elongation at break (%) of the specimen. The results are shown in Tables 1 and 2. FIGS. 2 (magnification: 5000) and 3 (magnification: 20,000) show electron micrographs of the tensile fractured surface of the carbon fiber composite material of Example 6, and FIGS. 4 (magnification: 5000) and 5 (magnification: 20,000) show electron micrographs of the tensile fractured surface of the carbon fiber composite material of Comparative Example 4.

### (7) Dynamic viscoelasticity test

Specimens were prepared by cutting the crosslinked carbon fiber composite material samples of Examples 1 to 11 and Comparative Examples 1 to 8 in the shape of a strip (40x1x5 (width) mm). Each specimen was subjected to a dynamic viscoelasticity test using a dynamic viscoelasticity tester DMS6100 (manufactured by SII) at a chuck distance of 20 mm, a measurement temperature of -100 to 300°C, a dynamic strain of ±0.05%, and a frequency of 10 Hz in accordance with JIS K 6394 to measure the dynamic modulus of elasticity (E', MPa). Tables 1 and 2 show the measurement results for the dynamic modulus of elasticity (E') at a measurement temperature of 30°C and 200°C.

**TABLE 1**

| | | | | Ex.1 | Ex.2 | Ex.3 | Ex.4 | Ex.5 | Ex.6 | Ex.7 | Ex.8 | Ex.9 | Ex.10 | Ex.11 |
|---|---|---|---|---|---|---|---|---|---|---|---|---|---|---|
| Elastomer | Type | | | NR | NR | NR | NR | NR | NR | NR | NR | EPDM | NR | NR |
| Properties of carbon nanofibers | Type of carbon nanofibers | | | MWNT -A | MWNT -A | MWNT -B | MWNT -B | MWNT -B | MWNT -B | MWNT -A | MWNT -B | MWNT -B | MWNT -B | MWNT-B |
| | Heating temperature | | °C | 1200 | 1200 | 1200 | 1200 | 1500 | 1200 | 1200 | 1200 | 1200 | 1200 | 1200 |
| | Roman peak ratio | | D/G ratio | 1.27 | 1.27 | 1.29 | 1.29 | 1.27 | 1.29 | 1.27 | 1.29 | 1.29 | 1.29 | 1.29 |
| | Tap density | | g/cm³ | 0.022 | 0.022 | 0.013 | 0.013 | 0.014 | 0.013 | 0.022 | 0.013 | 0.013 | 0.013 | 0.013 |
| | Specific surface area by nitrogen adsorption | | m²/g | 21 | 21 | 35 | 35 | 31 | 35 | 21 | 35 | 35 | 35 | 35 |
| Carbon fiber composite material | Amount | Elastomer | phr | 100 | 100 | 100 | 100 | 100 | 100 | 100 | 100 | 100 | 100 | 100 |
| | | MWNT-A | phr | 60 | 100 | 0 | 0 | 0 | 0 | 20 | 0 | 0 | 0 | 0 |
| | | MWNT-B | phr | 0 | 0 | 20 | 60 | 60 | 100 | 0 | 20 | 60 | 10 | 150 |
| | | HAF | phr | 0 | 0 | 0 | 0 | 0 | 0 | 40 | 40 | 0 | 0 | 0 |
| Pulsed NMR measurement results for uncrosslinked form | Raw material | T2n (30°C) | µsec | 700 | 700 | 700 | 700 | 700 | 700 | 700 | 700 | 520 | 700 | 700 |
| | Carbon fiber composite material | T2n (150°C) | µsec | 2860 | 1870 | 490 | 330 | 480 | 210 | 2600 | 1180 | 880 | 880 | 110 |
| | | fnn (150°C) | | 0 | 0 | 0 | 0 | 0 | 0 | 0 | 0 | 0 | 0 | 0 |
| | | T2s (150°C) | µsec | 12 | 9.5 | 13.9 | 6.7 | 7.1 | 6.1 | 24.6 | 12.9 | 6.4 | 18.8 | 5.3 |
| Properties of crosslinked carbon fiber composite material | Hardness JIS A | | | 68 | 80 | 51 | 68 | 71 | 80 | 73 | 71 | 65 | 46 | 77 |
| | M100 | | MPa | 13.9 | 19.1 | 3.4 | 19.5 | 11 | 23 | 11.2 | 12.5 | 18.6 | 1.8 | 6.2 |
| | M100 increase rate | | % | 24.1 | 20.2 | 13.9 | 34.4 | 18.7 | 24.6 | 48.3 | 55.6 | 20.5 | 10.0 | 3.9 |
| | Tensile strength | | MPa | 19.7 | 19.8 | 14.5 | 23.5 | 15.7 | 23.1 | 21.7 | 22.5 | 20.6 | 15 | 12.8 |
| | Elongation at break | | % | 155 | 105 | 275 | 115 | 220 | 100 | 210 | 260 | 201 | 400 | 360 |
| | E' (30°C) | | MPa | 13.0 | 49.0 | 3.0 | 14.0 | 43.0 | 50.0 | 14.0 | 18.0 | 129.0 | 2.0 | 349.0 |
| | E' (200°C) | | MPa | 8.6 | 16 | 4 | 8.1 | 16 | 19 | 11.2 | 13.1 | 41 | 2.4 | 89 |

| | | | | | | | | | | | | | | |
|---|---|---|---|---|---|---|---|---|---|---|---|---|---|---|
| Ex.: Example | | | | | | | | | | | | | | |

**TABLE 2**

| | | | | Comp, Ex.1 | Comp. Ex.2 | Comp. Ex.3 | Comp. Ex.4 | Comp. Ex.5 | Comp. Ex.6 | Comp. Ex.7 | Comp. Ex.8 |
|---|---|---|---|---|---|---|---|---|---|---|---|
| Elastomer | Type | | | NR | NR | NR | NR | NR | NR | NR | EPDM |
| Properties of carbon nanofibers | Type of carbon nanofibers | | | MWNT-A | MWNT-B | - | MWNT-B | MWNT-B | - | - | - |
| | Heating temperature | | °C | 2800 | 2800 | None | None | 1800 | None | None | None |
| | Raman peak ratio | | D/G ratio | 0.09 | 0.11 | - | 1.6 | 1.25 | - | - | - |
| | Tap density | | g/cm³ | 0.03 | 0.02 | - | 0.011 | 0.014 | - | - | - |
| | Specific surface area by nitrogen adsorption | | m²/g | 15 | 22 | - | 22 | 29 | - | - | - |
| Carbon fiber composite material | Amount | Elastomer | phr | 100 | 100 | 100 | 100 | 100 | 100 | 100 | 100 |
| | | MWNT-A | phr | 60 | 0 | 0 | 0 | 0 | 0 | 0 | 0 |
| | | MWNT-B | phr | 0 | 60 | 0 | 60 | 60 | 0 | 0 | 0 |
| | | HAF | phr | 0 | 0 | 60 | 0 | 0 | 0 | 40 | 0 |
| Pulsed NMR measurement results for uncrosslinked form | Raw material | T2n(30°C) | µsec | 700 | 700 | 700 | 700 | 700 | 700 | 700 | 520 |
| | Carbon fiber composite material | T2n(150°C) | µsec | 5010 | 2860 | 7310 | 250 | 760 | 6240 | 10500 | 2220 |
| | | fnn(150°C) | | 0.224 | 0.19 | 0.333 | 0 | 0 | 0.332 | 0.31 | 0.24 |
| | | T2s(150°C) | µsec | 495 | 470 | 1940 | 6.2 | 7.5 | 2140 | 2370 | 720 |
| Properties of crosslinked carbon fiber composite material | Hardness JIS A | | | 66 | 77 | 73 | 83 | 66 | 42 | 56 | 56 |
| | M100 | | MPa | 3.8 | 6.2 | 6.2 | - | 7.8 | 0.9 | 2.5 | 1.4 |
| | M100 increase rate | | % | 5.4 | 9.8 8 | 9.8 | - | 12.8 | 1.0 | 4.4 | 1.0 |
| | Tensile strength | | MPa | 13 | 12.8 | 21 | 15.5 | 13.8 | 4.4 | 14.9 | 1.9 |
| | Elongation at break | | % | 370 | 360 | 192 | 91 | 260 | 405 | 273 | 130 |
| | E' (30°C) | | MPa | 19.0 | 349.0 | 10.0 | 220.0 | 53.0 | 1.5 | 3.8 | 3.5 |
| | E' (200°C) | | MPa | 8 | 89 | 5 | 68 | 19 | 2.1 | 3.4 | 4.7 |

| | | | | | | | | | | | |
|---|---|---|---|---|---|---|---|---|---|---|---|
| Comp. Ex.: Comparative Example | | | | | | | | | | | |

As shown in Tables 1 and , the following items were confirmed by Examples 1 to 11 according to the invention. Specifically, the heated carbon nanofibers of Examples 1 to 11 according to the invention had a Raman peak ratio (D/G) of more than 1.25 and less than 1.6. The heated carbon nanofibers of Examples 1 to 11 had a tap density of 0.011 to 0.023 g/cm³. The crosslinked carbon fiber composite material samples of Examples 1 to 11 had an M100 increase rate higher than those of Comparative Examples 1 to 6. Specifically, the wettability of the carbon nanofibers with the elastomer was improved in Examples 1 to 11. As shown in FIGS. 4 and 5, the carbon nanofibers independently extended in the shape of fibers from the tensile fractured surface of the carbon fiber composite material of Comparative Example 4. On the other hand, short and thick ends of the carbon nanofibers protruded from the tensile fractured surface of the carbon fiber composite material of Example 6 shown in FIGS. 2 and 3. This suggests that the carbon nanofibers of Example 6 had improved wettability with the elastomer as compared with the carbon nanofibers of Comparative Example 4.

The uncrosslinked carbon fiber composite material samples of Examples 1 to 11 obtained using the heated carbon nanofibers had a spin-spin relaxation time (T2s/150°C) of 5 to 50 microseconds, a first spin-spin relaxation time (T2n) of 100 to 3000 microseconds, and a fraction (fnn) of components having the second spin-spin relaxation time of 0. In Examples 1 to 11, the first spin-spin relaxation time (T2n), the fraction (fnn), and the spin-spin relaxation time (T2s) were shorter than those of Comparative Examples 1 and 2 in which the carbon nanofibers heated at 2800°C were used.

The crosslinked carbon fiber composite material samples of Examples 1 to 9 according to the invention had an elongation at break at 23°C of 95% or more, and a rate of increase in 100% modulus with respect to the 100% modulus of the elastomer of 13% or more per part by weight of the carbon nanofibers mixed into 100 parts by weight of the elastomer. In Comparative Example 4, since the elongation at break was less than 100%, the measurement could not be conducted.

## Claims

1. A carbon fiber composite material comprising:
an elastomer; and
carbon nanofibers uniformly dispersed in the elastomer,
the carbon nanofibers being produced by a vapor growth method and then heated at a temperature that is in a range from 1100 to 1600°C and is higher than a reaction temperature employed in the vapor growth method.

2. The carbon fiber composite material as defined in claim 1, wherein the temperature of the heat treatment is from 1200 to 1500°C.

3. The carbon fiber composite material as defined in claim 1,
wherein the heat-treated carbon nanofibers have a ratio (D/G) of a peak intensity D at around 1300 cm⁻¹ to a peak intensity G at around 1600 cm⁻¹ measured by Raman scattering spectroscopy of more than 1.25 and less than 1.6.

4. The carbon fiber composite material as defined in claim 1, comprising:
15 to 120 parts by weight of the carbon nanofibers based on 100 parts by weight of the elastomer,
the carbon fiber composite material having an elongation at break at 23°C of 95% or more, and a rate of increase in 100% modulus with respect to the 100% modulus of the elastomer of 13% or more per part by weight of the carbon nanofibers mixed into 100 parts by weight of the elastomer.

5. The carbon fiber composite material as defined in claim 1,
the carbon fiber composite material in uncrosslinked form having a spin-spin relaxation time (T2s/150°C), measured at 150°C by the solid-echo method using the pulsed NMR technique with ¹H as an observing nucleus, of 5 to 50 microseconds; and
the carbon fiber composite material in uncrosslinked form having a first spin-spin relaxation time (T2n), measured at 150°C by the Hahn-echo method using the pulsed NMR technique with ¹H as an observing nucleus, of 100 to 3000 microseconds, and a fraction (fnn) of components having a second spin-spin relaxation time of 0 to 0.1.

6. The carbon fiber composite material as defined in claim 1, wherein the heat treatment is conducted in an inert gas atmosphere.

7. Carbon nanofibers obtained by heating untreated carbon nanofibers produced by a vapor growth method at a temperature that is in a range from 1100 to 1600°C and is higher than a reaction temperature employed in the vapor growth method.

8. The carbon nanofibers as defined in claim 1, wherein the temperature of the heat treatment is from 1200 to 1500°C.

9. The carbon nanofibers as defined in claim 7, having a ratio (D/G) of a peak intensity D at around 1300 cm⁻¹ to a peak intensity G at around 1600 cm⁻¹ measured by Raman scattering spectroscopy of more than 1.25 and less than 1.6.

10. The carbon nanofibers as defined in claim 7, wherein the heat treatment is conducted in an inert gas atmosphere.

11. A method of producing carbon nanofibers comprising:
heating untreated carbon nanofibers produced by a vapor growth method at a temperature that is in a range from 1100 to 1600°C and is higher than a reaction temperature employed in the vapor growth method.

12. The method of producing carbon nanofibers as defined in claim 11, wherein the temperature of the heat treatment is from 1200 to 1500°C.

13. The method of producing carbon nanofibers as defined in claim 11, wherein the heat treatment is conducted in an inert gas atmosphere.
